# EUROPEAN PATENT SPECIFICATION

(11) **EP 4 107 503 B1**
(45) Date of publication and mention of the grant of the patent: **03.04.2024**
(21) Application number: 21712211.8
(22) Date of filing: 18.02.2021
(51) Int. Cl.: G01M 17/007, B62D 53/06, B62D 61/00

(54) **POT-HOLE TESTING OF HEAVY VEHICLES**
SCHLAGLOCHTEST VON SCHWEREN NUTZFAHRZEUGEN
ESSAI DE NIDS-DE-POULE DES VÉHICULES LOURDS

(30) Priority: 18.02.2020 IT 202000003239
(43) Date of publication of application: 28.12.2022
(73) Proprietor: IVECO S.P.A., 10156 Torino (IT)
(72) Inventor: PEREIRA LEMOS, Jose Francivaldo, Sete Lagoas MG (BR); DE SOMMA, Michele, 10136 Torino (IT)
(74) Representative: Studio Torta S.p.A.
(86) International application number: PCT/IB2021/051370
(87) International publication number: WO 2021/165868

(56) References cited:
- Jaime Adame: "Driver transporting oversized load of material from former nuclear reactor in Arkansas issued citation", , 29 November 2018 (2018-11-29), XP055736460, Retrieved from the Internet: URL:https://www.arkansasonline.com/news/20 18/nov/29/driver-transporting-oversized-lo ad-material-former/ [retrieved on 2020-10-05]
- Jessica Barrett: "6 Steps to Securing Transport Loads", , 20 December 2018 (2018-12-20), XP055736472, Retrieved from the Internet: URL:https://www.safeopedia.com/6-steps-to- securing-transport-loads/2/6165 [retrieved on 2020-10-05]
- Ford Europe: "Pothole testing", , 23 March 2011 (2011-03-23), pages 1-2, XP054980960, Retrieved from the Internet: URL:https://www.youtube.com/watch?v=THQUs1 8B3R0 [retrieved on 2020-10-06]

## Description

### TECHNICAL FIELD

The invention relates to a heavy vehicle, in particular to a test vehicle for a pot-hole system.

### KNOWN STATE OF THE ART

It is known that vehicles are tested, before being introduced into the market, in order to assess their resistance to stresses of different mechanical, thermal or electromagnetic types.

This need is all the more felt in the heavy vehicle industry, where the number of types of devices equipping the vehicles and in need to be tested is much larger.

One of these tests, which is configured to test the assembly of a heavy vehicle, such as a truck, consisting of suspension, axle, wheel assembly, frame and cab, is the so-called "pot-hole" test.

During this test, the vehicle is driven on a track provided with a series of holes with a predetermined depth and with a series of bumps, also alternated with the aforesaid holes.

In particular said holes and said bumps can also be obtained transversely in the same position relative to the track, so that a hole is arranged in the right half of the track and a bump is arranged in the left half thereof. In this way, bumps and holes can be combined in order to subject the vehicle to the greatest stress possible and then assess the state thereof after it has been driven along the track.

This track is normally used to test small-length, medium-length and largelength vehicles. However, it is known that it is basically impossible to carry out this test in order to test a trailer truck. In this case, indeed, when driving on holes and bumps, the towing cab and the trailer would tend to stress the fifth-wheel coupling and, hence, their mutual connection, thus causing it to break.

As an alternative, in order to allow a towing cab to be tested under load conditions, the plane of the fifth-wheel coupling is loaded with weights that simulate the weight of the trailer. However, this situation does not clearly reflect reality, as the way in which the weight affects the cab is not realistic.

Examples of heavy vehicles that are not intended to be used in a pot-hole test system are disclosed in the following non patent literature documents:
- Jaime Adame: "Driver transporting oversized load of material from former nuclear reactor in Arkansas issued citation", 29 November 2018 [https:// www.arkansasonline.com/news/2018/nov/29/driver-transporting-oversized-load-material-former/]
- Jessica Barrett: "6 Steps to Securing Transport Loads", 20 December 2018 [https://www.safeopedia.com/6-steps-to-securing-transport-loads/2/6165] Furthermore, an example of pot-hole tests is known from the following video:
- Ford Europe: "Pothole testing", 23 March 2011 [URL:https:// www.youtube.com/watch?v=THQUs18B3R0]

Therefore, a vehicle is needed, which is configured to allow for a pot-hole test for a towing vehicle of a heavy vehicle, such as a trailer truck.

The object of the invention is to fulfil the needs discussed above in an economic and optimized fashion.

### SUMMARY OF THE INVENTION

The aforesaid object is reached by a pot-hole test system for a heavy vehicle according to claim 1 and a use of a pot-hole test system according to claim 2.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a schematic side view of a pot-hole test vehicle system according to the invention; and
- figure 2 is a top plan view of the vehicle system of figure 1.

### DETAILED DESCRIPTION OF THE INVENTION

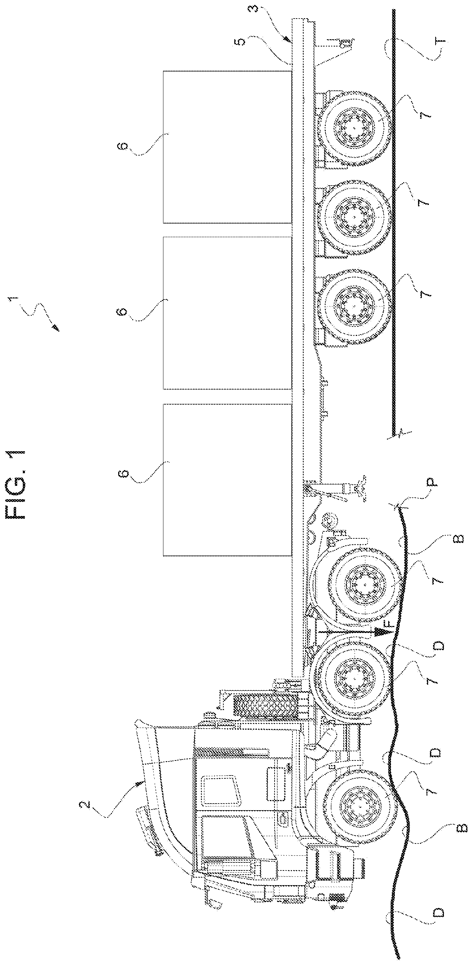

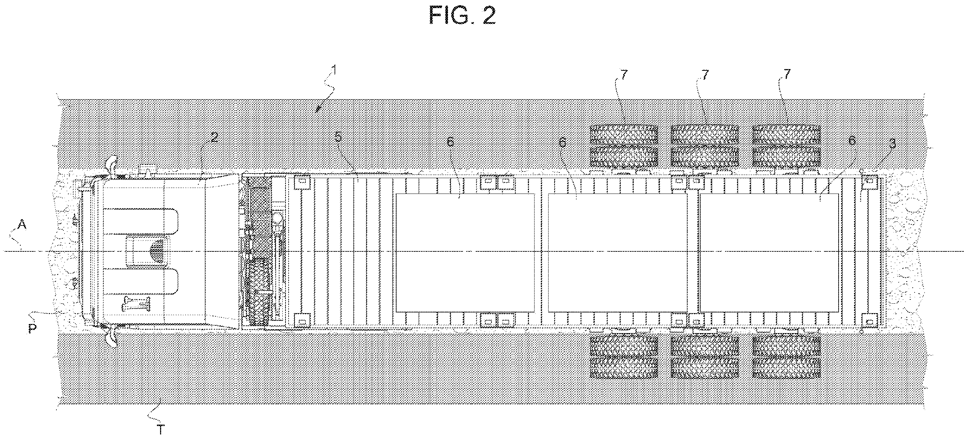

In figures 1 and 2, reference 1 indicates, as a whole, a heavy vehicle 1, such as a trailer truck, provided with a towing cab 2 and with a trailer 3. As it is known, the cab 2 and the trailer 3 can be of any type, provided that they comprise a connection system 4 configured to connect the cab 2 and the trailer 3 in a movable manner. Said connection system 4 normally is a fifth-wheel coupling.

The trailer 3 basically comprises a loading plane 5, which is configured to support one or more weights 6, which are calibrated so as to burden the connection system 4 in such a way that a predetermined force F is generated, which acts relative to the cab 2.

As it is also known, the cab 2 and the trailer 3 are provided with wheels 7, which are configured to cooperate - in contact - with the ground T in order to allow the vehicle 1 to move.

In particular, on the ground T, which usually is flat, there is obtained a pot-hole track P, namely provided with bumps D and holes B.

According to the invention, the wheels 7 of the trailer 3 are carried by the trailer 3 relative to a longitudinal axis A of the vehicle 1 so as to transversely extend to a greater extent than the wheels carried by the cab 2 so as not to cooperate - in contact - with the truck P, but only with the flat ground T.

Preferably, the wheels 7 are arranged transversely to the longitudinal axis A so as to project out of the support plane 5 defined by the trailer 3.

The embodiment of the vehicle 1 described above works as follows.

During the test phase, namely when the vehicle 1 is driven on the track P, the wheels 7 of the cab 2 follow the profile of the bumps D and of the holes B, hence stressing the frame, the suspensions and the other elements of the vehicle 1 to be tested. In the meantime, the force F, which is imparted by the trailer 3 by means of the connection means 4, worsens the stress situation, making it realistic.

However, since the trailer 3 has wheels 7 transversely arranged at a greater distance from the axis A than the wheels of the cab 2, it is not affected by the bumps D and by the holes B, as its wheels 7 are on the outside of the track P.

Owing to the above, the advantages of a vehicle 1 according to the invention are evident.

Thanks to the fact that the wheels 7 of the trailer 3 are transversely arranged at a greater distance than the wheels of the cab 2, so as not to roll on the track P, no configuration likely to break the connection means 4 can occur. In this way, the cab 2 can be tested in a real manner through the force F acting through the connection means 4.

Hence, a much more realistic estimation of the fatigue life of the cab 2 can be obtained in an economic and optimized manner.

Finally, the vehicle 1 according to the invention can be subjected to changes and variants, which, though, do not go beyond the scope of protection set forth in the appended claims.

For example, the wheels 7 of the trailer can clearly assume any position, provided that they are on the outside of the track P, and the trailer and the cab can be of any type.

## Claims

1. A pot-hole test system for a heavy vehicle (1) comprising a pot-hole track (P) made on a ground (T) and a heavy vehicle (1), said track (P) defining a plurality of holes (B) and bumps (D) along a direction parallel to a longitudinal axis (A) of said heavy vehicle (1),
**characterized in** said heavy vehicle (1) comprising a towing cab (2) and a trailer (3) selectively connectable to said cab (2) through connection means (4), said cab (2) and said trailer (3) each being provided with a plurality of wheels (7) configured to allow the movement of said heavy vehicle on said ground (T), said wheels (7) of said trailer (3) being arranged transversely to the longitudinal axis (A) of said heavy vehicle at a greater distance from the latter than said wheels (7) of said cab (2) so as to not be in contact with said track (P).

2. A use of a pot-hole test system for a heavy vehicle (1) according to claim 1 for conducting a pot-hole test.

## Patentansprüche

1. Schlaglochtestsystem für ein Schwerlastfahrzeug (1), umfassend eine Schlaglochstrecke (P) auf einem Untergrund (T) und ein Schwerlastfahrzeug (1), welche Strecke (P) eine Mehrzahl von Löchern (B) und Buckeln (D) entlang einer Richtung parallel zu einer Längsachse (A) des Schwerlastfahrzeugs (1) festlegt,
**dadurch gekennzeichnet, dass** das Schwerlastfahrzeug (1) eine Zugmaschine (2) und einen Anhänger (3) umfasst, der wahlweise mit der Zugmaschine (2) durch Verbindungsmittel (4) verbindbar ist, wobei die Zugmaschine (2) und Anhänger (3) jeweils mit einer Mehrzahl von Rädern (7) ausgestattet sind, dazu ausgebildet, die Bewegung des Schwerlastfahrzeugs auf den Untergrund (T) zu ermöglichen, wobei die Räder (7) des Anhängers (3) quer zur Langsachse (A) des Schwerlastfahrzeugs in einem größeren Abstand von demselben angeordnet sind als die Räder (7) der Zugmaschine (2), so dass sie nicht in Kontakt mit der Strecke (P) stehen.

2. Verwendung eines Schlaglochtestsystems für ein Schwerlastfahrzeug (1) gemäß Anspruch 1 zur Durchführung eines Schlaglochtests.

## Revendications

1. Système d'essai de nid-de-poule pour un véhicule lourd (1) comprenant une piste de nids-de-poule (P) réalisée sur un sol (T) et un véhicule lourd (1), ladite piste (P) définissant une pluralité de trous (B) et de bosses (D) le long d'une direction parallèle à un axe longitudinal (A) dudit véhicule lourd (1),
**caractérisé en ce que** ledit véhicule lourd (1) comprend une cabine de remorquage (2) et une remorque (3) pouvant être sélectivement raccordée à ladite cabine (2) par le biais de moyens de raccordement (4), ladite cabine (2) et ladite remorque (3) étant chacune prévues avec une pluralité de roues (7) configurées pour permettre le mouvement dudit véhicule lourd sur ledit sol (T), lesdites roues (7) de ladite remorque (3) étant agencées de manière transversale à l'axe longitudinal (A) dudit véhicule lourd à une plus grande distance de ce dernier que lesdites roues (7) de ladite cabine (2) afin de ne pas être en contact avec ladite piste (P).

2. Utilisation d'un système d'essai de nid-de-poule pour un véhicule lourd (1) selon la revendication 1 pour réaliser un essai de nid-de-poule.
